# EUROPEAN PATENT SPECIFICATION

(11) **EP 3 720 677 B1**
(45) Date of publication and mention of the grant of the patent: **14.09.2022**
(21) Application number: 18815637.6
(22) Date of filing: 05.12.2018
(51) Int. Cl.: B29C 45/18, B29C 45/37, B29B 17/02, B29B 17/04, B29C 33/42, B29K 105/26, B29C 37/00

(54) **METHOD FOR REMOLDING THERMOPLASTIC TRAYS**
VERFAHREN ZUR UMFORMUNG VON THERMOPLASTISCHEN SCHALEN
PROCÉDÉ DE REMOULAGE DE PLATEAUX THERMOPLASTIQUES

(30) Priority: 06.12.2017 SE 1751503
(43) Date of publication of application: 14.10.2020
(73) Proprietor: Frametray Tech AB, 247 50 Dalby (SE)
(72) Inventor: MOLANDER, Dan, 291 53 Kristianstad (SE)
(74) Representative: Ström & Gulliksson AB
(86) International application number: PCT/EP2018/083680
(87) International publication number: WO 2019/110677

(56) References cited:
- DE-A1- 2 211 882
- DE-A1- 3 934 969

## Description

### TECHNICAL FIELD

The present invention relates to remolding and recycling processes, and in particular to a method for remolding thermoplastic materials in connection with production and use of carriers consisting of such materials.

### BACKGROUND

Thermoplastics are polymers that become pliable or moldable above a specific temperature and solidify upon cooling. Thus, thermoplastics may - as opposed to thermoset plastics - be reshaped by heating.

The industrial applications of thermoplastics are many, which spires from the materials being adaptable in terms of shape and properties to specific applications in combination with favorable properties in terms of durability and an associated low cost of production.

Comparatively low production costs of thermoplastics are however associated with a number of down sides; one being that the economic incentives for reusing thermoplastics are insufficient. Also, recycling thermoplastics to produce high-grade products is associated with technical difficulties. Consequently, due to the industry's incentives for responsible utilization of virgin material into quality products being sparse, more sustainable examples of where thermoplastics are reused to produce new quality products are today still few.

However, as environmental aspects climb the agenda worldwide, steps have been taken towards more sustainable utilization of natural resources in general and materials are being recycled to a greater extent. In the field of plastics, however, waste material is typically either collected and combusted for heat generation or used as low grade bulk material i.a. within construction. Thus, thermoplastics are typically not subjected to refinement of waste material necessary to be able to anew produce high grade products.

In this regard, certain systems and methods are known for instance from WO2017/007913A1, DE2211882A1 and DE3934969A1. However, these known systems suffer from most of the disadvantages as discussed above.

More specifically, DE2211882 discloses the processing steps a-d of claim 1 in suit after exact separation of plastic waste.

As such, there is a need for an improved material utilization in connection with remolding and recycling of articles made of thermoplastics; in particular trays for carrying goods.

### SUMMARY

It is thus an object of the present invention to provide an improved technique for recycling thermoplastics in order to overcome or at least mitigate the disadvantages of prior-art methods and systems. This object has now been achieved by a method set forth in appended claim 1; preferred embodiments being defined in claims 2-9.

In an aspect, there is provided a method for remolding a thermoplastic material comprising the steps of: molding thermoplastic carriers in an injection molding apparatus; using the molded carriers in a transportation and/or manufacturing process; degrading the used carriers in a degrading apparatus to obtain a non-virgin granulate; and providing the non-virgin granulate to the injection molding apparatus for recycling. The injection molding apparatus is configured to - in the molding step - mold the thermoplastic carriers with an integrally formed indicator which is indicative of the injection molding apparatus. Prior to the degrading, the thermoplastic carriers are selectively filtered by means of the associated indicators so that correctly indicated, used carriers are fed into the degrading apparatus. Used carriers are selectively filtered by means of the indicator being detected by means of a filtering device. Hereby improved quality of the material is achieved. Further advantages will be explained herein.

In a feasible implementation, the indicator is provided with information which is specific to the injection molding apparatus, whereby the origin of the indicator is made traceable.

In a further possible implementation, the indicator is provided with information relating to injection molding properties of a thermoplastic material; thus facilitating obtaining high grade items when remolding the material.

In yet another feasible implementation, the indicator is provided with information relating to material preferences of the injection molding apparatus. Thereby relevant information is given regarding which injection molding apparatus the material is suitable for.

In a possible implementation, the indicator is provided with visually intelligible information; thereby facilitating ease of identification e.g. to an operator.

In a further feasible implementation, the indicator is provided with information comprising a modulus of elasticity and/or a melt index; thereby providing information relevant for remolding of the material.

In another possible implementation, the indicator comprises a light absorption coefficient. Thereby the carrier is provided with a detectable characterization facilitating ease of filtering the carrier.

In still another possible implementation, the indicator is molded in a mold cavity of the injection molding apparatus, whereby the indicator is formed as an integral part of the carrier and thus being less susceptible to mechanical and chemical wear while providing a cost and time efficient manufacturing process.

Further advantages of the above aspect and implementations will be described in the following.

### BRIEF DESCRIPTION OF THE DRAWINGS

Embodiments of the present invention will now be described with reference to the accompanying drawings which illustrate non-limiting examples on how the embodiments can be reduced into practice and in which:
Fig. 1 is a diagrammatic representation of a method according to one embodiment of the disclosure,
Fig. 2 is a diagrammatic representation of a method according to a further embodiment of the disclosure,
Fig. 3 shows a system for remolding a thermoplastics material according an embodiment, and
Fig. 3A shows a detail of Fig.3 on a larger scale.

### DETAILED DESCRIPTION

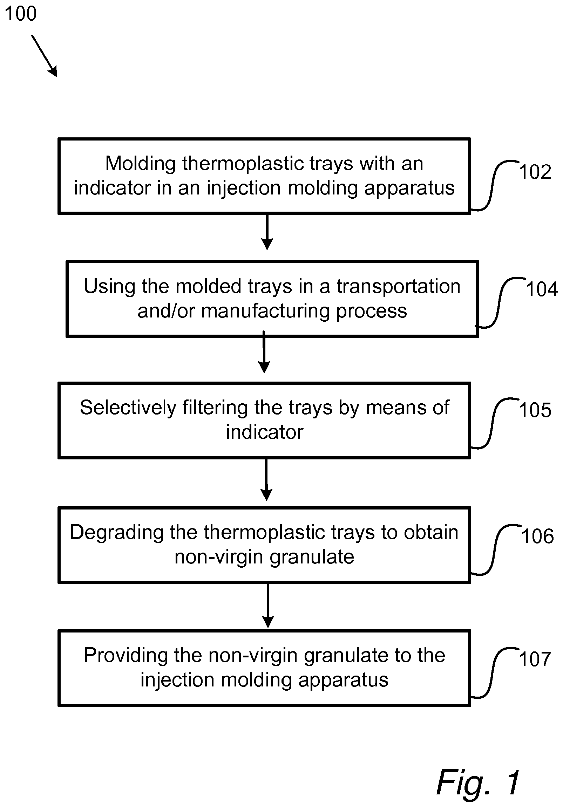

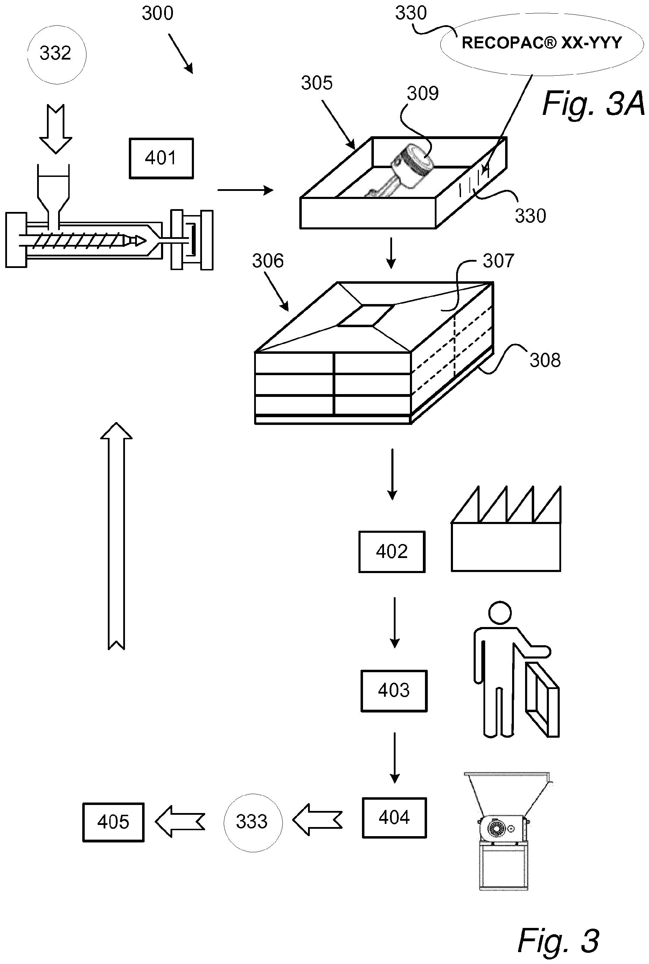

In Fig. 1 there is illustrated an exemplary method of remolding a thermoplastic material according to one embodiment. In step 102, thermoplastic carriers are molded in an injection molding apparatus 401 as shown in Fig. 3. The injection molding apparatus 401 is basically of a known design and is not described in detail here.

Generally in this disclosure, aspects comprise thermoplastic carriers in the form of trays 305 which can carry for instance items to be used in manufacturing or assembly processes. Each thermoplastic tray 305 is molded with an indicator 330 which can be a kind of marking on a side surface of the tray 305 (see Fig. 3A). Preferably, the thermoplastic material is polypropylene (PP) but other thermoplastic materials are feasible.

After use in a transportation and/or manufacturing process 104 (not described in detail here), the trays 305 are - in a subsequent step 105 - selectively filtered by means of the indicator 330, and in a further subsequent step 106 the trays 305 are degraded to obtain a non-virgin granulate 333. In a final step 107, the non-virgin granulate 333 is provided to the injection molding apparatus 401 for recycling the thermoplastic material e.g. by feeding the non-virgin granulate to the injection molding apparatus 401 as material for molding trays 305.

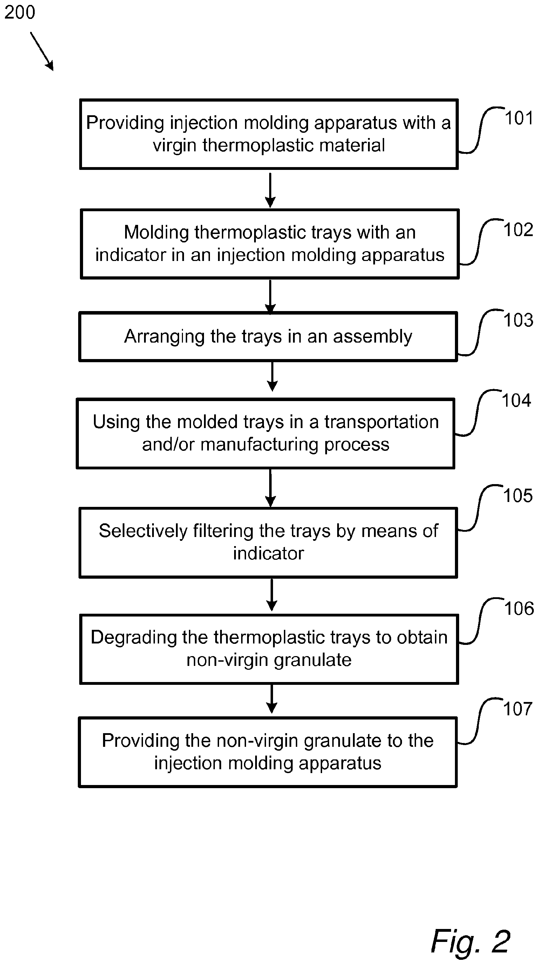

Fig. 2 illustrates a further embodiment. In a first step 101, an injection molding apparatus 401 is provided with a virgin thermoplastic material 332 (see Fig. 3). In a subsequent step 102, thermoplastic trays 305 are molded in the injection molding apparatus 401. The thermoplastic trays 305 are molded with an indicator 330. In a yet further step 103, the trays 305 are assembled - here stacked - to a form a tray assembly 306 (see Fig. 3). This stack 306 of trays 305 may be transported to a user or a manufacturing process 402, for instance a car manufacturing plant in a still further step 104, wherein the tray assembly 306 is disassembled - for instance at said plant.

In step 105, the trays 305 are selectively filtered by means of the associated indicator 330 identified for instance by a filtering device 403 which can be either automatic or staff-operated, such as by an operator supervising a degrading mill (Fig 3). In one or more following degrading steps 106, the trays 305 are degraded to obtain a non-virgin granulate 333 which may have a particle size of approximately 1-2 mm. The degrading is performed in a degrading apparatus 404 which can be of known design not described in detail here. For instance, it can be a milling unit.

A step of mechanical cleaning 405 of the non-virgin granulate may follow the degrading step 106. Finally, the non-virgin granulate 333 is brought to the injection molding apparatus 401 for recycling the thermoplastic material, typically in the form of pelletized granulate. The non-virgin granulate 333 may be blended to comprise 3 to 7 % virgin thermoplastic material 332, preferably 4 to 6 %, more preferably 5 %.

In order to obtain refined high-grade articles through an injection molding process, the choice of material may be imperative. A number of material-related characteristics may be taken into account, such as the composition and the pureness of the input material to the process. A high-grade material may be referred to as a pure material in the meaning that it has a composition substantially corresponding to or purely corresponding to that of the virgin material composition selected. The selected material may in turn comprise one or more components i.e. a mix of compounds to achieve the desired properties of the material used for the injection molding.

Accordingly, in the process of remolding a thermoplastic material there may be demands on the thermoplastic material used as input material to the injection molding apparatus 401 in the remolding cycle 100, 200.

It is an object of the present disclosure to control the material flow in a cycle for remolding thermoplastic material in order to safeguard quality and reliability of the molded product, to reduce down-time in manufacturing and to reduce or render obsolete any mechanical cleaning necessary to obtain a high-grade non-virgin material 333 for the remolding cycle 100, 200 of the thermoplastic material and to reduce environmental impact. It is a further object to reduce cost of the remolding cycle 100, 200.

As will be explained herein, objects of the disclosure are achieved by providing a method 100, 200 for remolding thermoplastic material. The indicator 330 of each tray 305 is indicative of the injection molding apparatus 401 in which it has been molded.

The trays 305 may comprise one indicator or a plurality of indicators. The indicator(s) 330 are(is) disposed on one or more external surfaces of the trays 305, for example on a side surface, on a top face or a bottom face of the trays 305 for increased exposure and thus facilitating ease of identification.

The indicator 330 may comprise information relating to the geographic location of the injection molding apparatus 401 in which the trays 305 having the indicator 330 were molded. Furthermore, the indicator 330 may carry information relating to injection molding properties of the thermoplastic material 332, 333 used for the trays 305.

In certain embodiments, the indicator 330 includes information relating to injection molding properties of the material of the trays 305 i.a. injection molding properties may include injection molding parameters and/or modulus of elasticity and melt index of the material. The indicator 330 may carry information relating to injection molding properties of a thermoplastic material which corresponds to material preferences of the injection molding apparatus 401.

The injection moulding apparatus 401 is configured to provide the thermoplastic trays 305 with an indicator 330 by means of a mold cavity of the injection molding apparatus 401. Thus, the mold cavity per se constitutes the mold forming the indicator 330. Also, the injection molding apparatus 401 is configured to follow a number of commands corresponding to an injection molding sequence to produce the trays 305 such that the injection molding apparatus 401 carries out the commands. Further, the injection molding apparatus 401 may be provided with a digital model (not shown), such as a discretized 3D model of the tray 305 and/or the mold cavity for producing the tray 305.

The trays 305 are selectively filtered by various filtering means or devices 403 as will be explained herein. The indicator 330 comprises a detectable indicator 330 unique for the present material used to manufacture the trays 305. As such, the indicator 330 may take various forms and may be detected and distinguished by means of various detection means used to filter the trays 305.

The indicator 330 may comprise a visual indicator which includes visually readily derivable information, e.g. text intelligible to an operator or sensor means. In particular, the indicator 330 comprises a melt index representing the amount of a thermoplastic resin, measured in grams, which can be forced through a specified orifice within a time interval when subjected to a specified force.

In a preferred embodiment, the indicator 330 comprises a brand or product name in combination with a melt index and/or an E-modulus of the thermoplastic material of the tray 305. An example "RECOPAC^{®} XX-YYY" is shown in Fig. 3A, where RECOPAC^{®} is a registered trademark owned by the Swedish company Molander Tech AB belonging to the same Group as the present applicant. The identification XX represents the melt index and YYY the E-modulus of the thermoplastic material used for the tray 305 in question.

In the recognition and filtering step, only correctly identified trays 305 carrying the RECOPAC^{®} sign are passed further to the degrading mill 404. Trays identified as incorrect - that is trays without the RECOPAC^{®} sign - are rejected from the flow/line by the filtering device 403. Thereby, only correctly identified trays 305 having the RECOPAC^{®} sign are fed into the mill 404. Hereby, it is secured that "clean" thermoplastic material is degraded in the mill 404 and passed further to next step in the recycling loop (see Fig. 3).

Other examples of identification comprise melt-flow rate, melt-flow index, or base resin melt index. The indicator 305 may be detectable by means of Optical Character Recognition or the like image or text recognition means (not shown). In certain embodiments, the indicator 330 may comprise a unique shape, such as a 3D barcode (not shown).

Furthermore, the indicator 330 may be provided with a tactile indicator comprising protrusions or depressions (not shown). The indicator 330 may include a resonance indicator, for example the indicator or the material of the tray may absorb and/reflect soundwaves having a specific frequency (not shown).

In addition, the indicator 330 may comprise a molecular label, for example the thermoplastic material may have a certain composition detectable by means of a detection means, such as a chemical detection means e.g a remote near infrared sensor, absorption spectrum, extinction coefficient, remote spectral sensing or the like (not shown). Furthermore, the indicator 330 may include surface roughness indicator, detectable by means of surface analysis means or an operator (not shown). In certain cases, the indicator 330 may comprise a surface indicator detectable by means of light scattering (not shown). The indicator 330 may also have a mechanically stamped indicator (not shown).

The indicator 330 may comprise a light absorbance coefficient indicator (not shown), and in certain embodiments the indicator 330 is based on the provision that the tray 305 has a light absorbance coefficient different from a light absorbance coefficient of a pallet 308 and/or a cover 307 and/or other components of a tray stack or assembly 306.

The indicator 330 may be based on the provision that the tray 305 having a light absorbance coefficient being higher than a light absorbance coefficient of the pallet 308 and/or the cover 307 and/or other components of the tray assembly 306.

The trays 305 serve to carry goods 309, such as products for delivery to a manufacturing process. In this sense, the tray 305 or a plurality of trays 305 may constitute a packaging. The method 100, 200 may further comprise the step of stacking one or more trays 305 interposed between the pallet 308 and the cover 307.

In certain applications, the trays 305 are assembled, for example stacked, to form a shipment-ready tray stack or assembly 306 which may be compatible e.g. with means such as a fork-lift. The tray assembly 306 may comprise the stackable trays 305 stacked on each other on the customized pallet 308 underneath the trays 305 and supplied with a customized lid or cover 307 above the trays 305. As shown, the tray assembly 306 is utilized for transportation purposes involving one or more thermoplastic trays 305 for accommodating goods 309. The entities contributing to the structural integrity of the tray assembly 306 may include, not limited to the pallet 308, the tray(s) 305, the cover 307 and the goods 309 to be transported and/or used in the manufacturing process.

The method 100, 200 may comprise a sending step, where the injection molding apparatus 401 provides the tray 305 with a modulation in the form of an indicator 330 and the method 100, 200 comprises a receiving step comprising filtering material to pass material comprising the modulation in the form of the indicator 330 (not shown). The receiving step comprises recognition of the indicator 330 and a step of filtering to pass only trays bearing the indicator 330.

In a system 300 for carrying out the method 100, 200 the tray assembly 306 is disassembled and the components of the tray assembly 306, i.e. one or more trays 305, the pallet 308, the cover 307, are collected at one or more recycle facilities for mechanically degrading the thermoplastic trays 305 by means of one or more degradation apparatus 404 in a degradation step to obtain a non-virgin thermoplastic granulate 333. The recycle facility, upon implementation of the disclosed method 100, 200 and system 300, comprises one or more facilities at various geographic locations. The recycle facility may comprise selective filtering apparatus 403 as well as degradation apparatus 404 for mechanically degrading the trays 305. Thus, the method 100, 200 comprises the step of selectively filtering the thermoplastic tray 305 from pallet 308 and lid 307.

According to the method 100, 200, prior to the degrading 106 of the trays 305, the thermoplastic trays 305 are selectively filtered by means of the indicator 330 so that correctly indicated trays 305 are fed into the degrading apparatus 404. The degrading apparatus 404 may comprise one or more milling units (not shown).

The step of selectively filtering comprises selectively selecting one or more of the components of the tray assembly 306 by means of the indicator 330 and corresponding methods for detecting the indicator 330 as described herein. The step of selectively filtering 106 may be carried out by a filtering device 403 which automatically or semi-automatically detects the indicator 330.

The method 100, 200 comprises a step 106 of degrading the thermoplastic trays 305 in the degrading apparatus 404 to obtain a non-virgin granulate 333, and providing the non-virgin granulate 333 to the injection molding apparatus 401 for recycling.

The degrading apparatus 404 comprises one or more milling units at various geographical locations (not shown). Furthermore, the degrading apparatus 404 includes means for mechanically degrading the trays 305 such as to reduce the volume of the thermoplastic trays 305, i.e. increase the density. The degrading apparatus 404 includes means for grounding flakes into a non-virgin granulate 333. The recycle facilities may as mentioned comprise one or more facilities at various geographic locations. For example, an advantage is achieved if the non-virgin material 333 is shipped as flakes or as granulate in order to reduce the volume of the material, thereby being more cost-efficient to transport.

The one or more degrading steps 106 facilitate(s) obtaining a granulate 333 for use in the injection molding apparatus 401.

However, further steps of mechanical cleaning of the thermoplastic granulate 333 e.g. by means of a mechanical cleaning apparatus 404, may be necessary as the granulate 333 may contain debris of other materials present in the handling and logistic chain of the present system 300. This may for instance take place between a user, such as a manufacturing process 402, and a facility carrying out the filtering step 105 and the degrading apparatus 404, such as metal or plastics, thermoplastic material of different grade having material properties different from that of what is required by the injection molding apparatus 401, or otherwise not compatible with the injection molding apparatus 401 or would not result in trays 305 having the required properties.

Consequently, a step of mechanical cleaning of the granulate may be necessary to safeguard the preferred pureness of the non-virgin material 333 prescribed by the injection molding apparatus 401 and/or as prescribed in order to achieve the preferred mechanical properties of the trays 305. Mechanical cleaning may be performed by means of a process or mechanical cleaning apparatus 405.

The step of mechanical cleaning of the granulate 333 which forms part of the disclosed method may be reduced or rendered obsolete by carrying out the disclosed method 100, 200.

The system comprises one or more of: an injection molding apparatus 401 for molding thermoplastic trays 305, a manufacturing process facility 402, a filtering device 403, a degrading apparatus 404 for degrading the thermoplastic trays 305 to obtain a non-virgin granulate 333, a mechanical cleaning apparatus 405. The injection molding apparatus 401 is configured to mold the thermoplastic trays 305 with an integrally formed indicator 330, indicator indicative of the injection molding apparatus 401. Prior to the degrading, the thermoplastic trays 305 are selectively filtered 105 by means of the indicator 330 so that correctly indicated trays are fed into the degrading apparatus 404.

In an aspect, the method comprises a step of providing thermoplastic carriers or trays 305 configured to be used in a transportation and/or manufacturing process. The carriers 305, which are injection moulded, are provided with a sign or markings 330 related to the thermoplastic material. In a degrading station 404, the used carriers 305 are degraded to obtain granulate. Prior to the degrading station 404, the thermoplastic carriers 305 are selectively filtered by means of the associated signs/markings 330 so that correctly indicated, used carriers 305 are fed to the degrading station 404 whereas carriers with incorrect signs/markings are rejected. Hence, correctly identified thermoplastic material is degraded in the station 404. Hereby improved quality of the thermoplastic material is achieved in the recycling loop. The subsequent line after the degrading station 404 may include a cleaning station 405 and thereafter an injection molding station 401 in which fresh trays 305 are produced.

The disclosed method has several advantages not limited to reduced cost of the entire cycle 100, 200 of remolding the thermoplastic material, reduced mechanical cleaning, improved quality of the thermoplastic trays 305, less down-time in production and thereby improved economy and shortened lead-time and improved reliability of the trays 305.

### Further description of the procedures and processes

As stated above thermoplastics materials become pliable or moldable above a specific temperature and solidify upon cooling.

Injection molding is a manufacturing process for producing articles by injecting material into a mold. The injection molding process can be performed with a host of materials mainly including metals, glasses, elastomers, confections, and most commonly thermoplastic and thermosetting polymers. Material for the article is fed into a heated barrel, mixed, and forced into a mold cavity, where it cools and hardens to the configuration of the cavity. After a product is designed, molds are made typically from metal, usually either steel or aluminum, and precision-machined to form the features of the desired article. Injection molding is widely used for manufacturing a variety of articles, from the smallest components to entire body panels of cars. Advances in 3D printing technology, using photopolymers which do not melt during the injection molding of some lower temperature thermoplastics, can be used for some simple injection molds.

Articles to be injection molded must are carefully designed to facilitate the molding process. The material used for the article, the desired shape and features of the article, the material of the mold, and the properties of the molding machine must all be taken into account. The versatility of injection molding is facilitated by this breadth of design considerations and possibilities.

The material, which is typically supplied in the form of pelletized thermoplastic material should preferably comprise an elastic modulus within the specific range dictated during the design process.

As a selected material is recycled, the recycled material can contain fractions of other materials or impurities resulting in a new diluted material composition, thereby rendering a recycled material with different characteristics than the initial virgin material used at the outset, which for various reasons may be undesired for the injection molding apparatus or the finished injection molded item. Impurities in the material can for example include deviating mean particle size, altered injection molding characteristics or alien objects causing harm to the injection molding equipment.

For example, the injection molding apparatus may not be compatible with the new material composition, the components of the injection molding apparatus such as injectors or the mold cavity typically require a certain particle size, such as a maximum particle size, or a certain E-modulus, certain melting properties, viscosity at a given temperature or curing properties.

Consequently, neglecting to provide the injection molding apparatus with the prescribed material potentially have severe consequences in production, cause damage and defects to the molded product or system shutdown of the injection molding apparatus. In addition, such variances in the material provided to the injection molding apparatus can further result in the molded article not being provided with the prescribed properties as calculated during the design phase. The molded article may not have the structural integrity demanded for its use and may as a consequence fail during such use.

Injection molded articles may be highly customized to the intended use, for example to a specific product, to minimize material consumption and to minimize weight of the article.

In order to do so without jeopardizing the function of the article, care must be taken during the design phase. Since the design phase relies on the quality of the material prescribed, it is suitable to supply the manufacturing process with a material exhibiting essentially the prescribed properties.

As shown herein, sustainability is not necessarily associated with higher costs. Rather, the described embodiments show that advantages of a sustainable production of high grade products are not limited to environmental aspects, but that with such interplay synergistic effects arise also in terms inter alia of quality and economy.

Finally it should be mentioned that the inventive concept is by no means limited to the embodiments and examples described here, and modifications are feasible within the scope of invention set forth in the appended claims. For instance, the specific appearance of the carriers or trays may vary depending on the purpose of the same - in particular the products to be carried and transported. Furthermore, the specific type of thermoplastic material to be remolded can vary.

## Claims

1. A method for remolding thermoplastic material, said method comprising the steps of:
a) molding thermoplastic carriers in an injection molding apparatus;
b) using the molded carriers in a transportation and/or manufacturing process;
c) degrading the used carriers in a degrading apparatus to obtain a non-virgin granulate; and
d) providing said non-virgin granulate to said injection molding apparatus for recycling;
e) wherein said injection moulding apparatus - in said molding step - is configured to mold each thermoplastic carrier with an integrally formed indicator which is indicative of said injection molding apparatus;
f) wherein - prior to said degrading step - the thermoplastic carriers are selectively filtered by means of the associated indicators, so that correctly indicated, used carriers are fed into said degrading apparatus; and
g) wherein used carriers are selectively filtered by means of said indicator being detected by means of a filtering device.

2. The method according to claim 1, wherein used thermoplastic carriers identified as incorrect by said filtering device - prior to the degrading step - are rejected from the recycling loop.

3. The method according to claim 1 or 2, wherein said indicator is provided with information which is specific to said injection molding apparatus.

4. The method according to any one of claims 1 to 3, wherein said indicator is provided with information relating to injection molding properties of a thermoplastic material.

5. The method according to any one of claims 1 to 4, wherein said indicator is provided with information relating to material preferences of said injection molding apparatus.

6. The method according to any one of claims 1 to 5, wherein said indicator is provided with visually intelligible information.

7. The method according to any one of claims 1 to 6, wherein said indicator is provided with information comprising a modulus of elasticity and/or a melt index.

8. The method according to any one of claims 1 to 7, wherein said indicator comprises a light absorption coefficient.

9. The method according to any one of claims 1 to 8, wherein said indicator is molded in a mold cavity of said injection molding apparatus .

## Patentansprüche

1. Verfahren zum Umformen von thermoplastischem Material, wobei das Verfahren die folgenden Schritte umfasst:
a) Formen von thermoplastischen Trägern in einer Spritzgießvorrichtung;
b) Verwendung der geformten Träger in einem Transport- und/oder Herstellungsprozess;
c) Abbau der verwendeten Träger in einer Abbauvorrichtung, um ein nicht jungfräuliches Granulat zu erhalten; und
d) Bereitstellung des nicht jungfräulichen Granulats für die Spritzgießvorrichtung zum Recycling;
e) wobei die Spritzgießvorrichtung - in dem Formungsschritt - so konfiguriert ist, dass sie jeden thermoplastischen Träger mit einem integral ausgebildeten Indikator formt, der die Spritzgießvorrichtung anzeigt;
f) wobei die thermoplastischen Träger vor dem Abbauschritt mittels der zugehörigen Indikatoren selektiv gefiltert werden, so dass korrekt angezeigte, gebrauchte Träger in die Abbaumaschine eingespeist werden; und
g) wobei die benutzten Träger selektiv gefiltert werden, indem der Indikator mit Hilfe einer Filtervorrichtung erfasst wird.

2. Verfahren nach Anspruch 1, wobei gebrauchte thermoplastische Träger, die von der Filtervorrichtung vor dem Abbau als inkorrekt identifiziert wurden, aus dem Recyclingkreislauf ausgeschieden werden.

3. Verfahren nach Anspruch 1 oder 2, wobei der Indikator mit Informationen versehen ist, die für die Spritzgießvorrichtung spezifisch sind.

4. Verfahren nach einem der Ansprüche 1 bis 3, wobei der Indikator mit Informationen bezüglich der Spritzgusseigenschaften eines thermoplastischen Materials versehen ist.

5. Verfahren nach einem der Ansprüche 1 bis 4, wobei der Indikator mit Informationen bezüglich der Materialpräferenzen der Spritzgießvorrichtung versehen ist.

6. Verfahren nach einem der Ansprüche 1 bis 5, wobei der Indikator mit visuell verständlichen Informationen versehen ist.

7. Verfahren nach einem der Ansprüche 1 bis 6, wobei der Indikator mit Informationen versehen ist, die einen Elastizitätsmodul und/oder einen Schmelzindex umfassen.

8. Verfahren nach einem der Ansprüche 1 bis 7, wobei der Indikator einen Lichtabsorptionskoeffizienten umfasst.

9. Verfahren nach einem der Ansprüche 1 bis 8, wobei der Indikator in einem Formhohlraum der Spritzgießvorrichtung geformt wird.

## Revendications

1. Procédé pour remouler un matériau thermoplastique, ledit procédé comprenant les étapes constituées par :
a) le moulage de supports thermoplastiques dans un appareil de moulage par injection ;
b) l'utilisation des supports moulés dans un processus de transport et/ou de fabrication ;
c) la dégradation des supports utilisés dans un appareil de dégradation afin d'obtenir un granulat non vierge ; et
d) la fourniture dudit granulat non vierge audit appareil de moulage par injection dans un but de recyclage ;
e) dans lequel ledit appareil de moulage par injection - au niveau de ladite étape de moulage - est configuré de telle sorte qu'il moule chaque support thermoplastique avec un indicateur formé d'un seul tenant qui est indicatif dudit appareil de moulage par injection ;
f) dans lequel - avant ladite étape de dégradation - les supports thermoplastiques sont filtrés de façon sélective au moyen des indicateurs associés, de telle sorte que les supports utilisés et correctement indiqués soient alimentés à l'intérieur dudit appareil de dégradation ; et
g) dans lequel les supports utilisés sont filtrés de façon sélective au moyen dudit indicateur qui est détecté au moyen d'un dispositif de filtrage.

2. Procédé selon la revendication 1, dans lequel les supports thermoplastiques utilisés qui sont identifiés comme étant incorrects par ledit dispositif de filtrage - avant l'étape de dégradation - sont rejetés de la boucle de recyclage.

3. Procédé selon la revendication 1 ou 2, dans lequel ledit indicateur est muni d'une information qui est spécifique audit appareil de moulage par injection.

4. Procédé selon l'une quelconque des revendications 1 à 3, dans lequel ledit indicateur est muni d'une information qui concerne les propriétés de moulage par injection d'un matériau thermoplastique.

5. Procédé selon l'une quelconque des revendications 1 à 4, dans lequel ledit indicateur est muni d'une information qui concerne les préférences en termes de matériau(x) dudit appareil de moulage par injection.

6. Procédé selon l'une quelconque des revendications 1 à 5, dans lequel ledit indicateur est muni d'une information intelligible visuellement.

7. Procédé selon l'une quelconque des revendications 1 à 6, dans lequel ledit indicateur est muni d'une information qui comprend un module d'élasticité et/ou un indice de fusion.

8. Procédé selon l'une quelconque des revendications 1 à 7, dans lequel ledit indicateur comprend un coefficient d'absorption de la lumière.

9. Procédé selon l'une quelconque des revendications 1 à 8, dans lequel ledit indicateur est moulé dans une cavité de moule dudit appareil de moulage par injection.
